# EUROPEAN PATENT APPLICATION

(11) **EP 3 139 546 A1**
(43) Date of publication of application: **08.03.2017**
(21) Application number: 16184906.2
(22) Date of filing: 19.08.2016
(51) Int. Cl.: H04L 12/28, H04W 52/02, F25D 29/00, H04W 4/00, H04W 76/04

(54) **A HOUSEHOLD APPLIANCE SUITABLE FOR COMMUNICATION WITH WIRELESS COMMUNICATION TERMINALS**

(30) Priority: 07.09.2015 TR 201511095
(71) Applicant: Arçelik Anonim Sirketi, 34950 Istanbul (TR)
(72) Inventor: ULGUR, IBRAHIM NIYAZI, 34950 ISTANBUL (TR); SARIKAYA, ERSIN, 34950 ISTANBUL (TR); YIKILMAZCINAR, SEZGI, 34950 ISTANBUL (TR); AYHAN, YUNUS EMRE, 34950 ISTANBUL (TR)

(57) **Abstract**

The present invention relates to a household appliance (1) that is suitable for the communication with a wireless communication terminal (T), and that comprises a body (2); a door (3) that provides access to the interior of the body (2); a sensor (4) that detects the opening and the closing of the door (3); a control unit (5); and a module (6) that realizes the data exchange between the control unit (5) and the wireless communication terminal (T) by means of wireless data exchange methods, and that has one active state wherein the module (6) is accessible by the wireless communication terminals (T) by emitting electromagnetic waves and one inactive state wherein the module (6) does not emit electromagnetic waves.

## Description

The present invention relates to a household appliance that is suitable for communication with wireless communication terminals like telephone, tablet and computer.

With the development of the wireless communication technology, the production of household appliances that exchange data with wireless communication terminals has gained speed. Especially in the household appliances that are a part of the everyday life of the user like refrigerator, oven, dishwasher and washing/drying machine, the feature of communication with wireless communication terminals is becoming widespread day by day. However, sometimes the communication channels of the household appliances can be accessed by foreign wireless communication terminals and an efficient security cannot be provided even if the communication channel is protected by a code. Moreover, keeping the wireless communication means or the elements that enable controlling the wireless communication feature like the monitor and interface in the continually functioning state causes increase in the energy consumption of the household appliance. On the other hand, additional components that provide controlling the wireless communication feature generates an unwanted cost for users who do not use this feature. Therefore, a household appliance that does not have a user interface and the wireless communication feature of which can be activated if required is needed.

In the state of the art German Patent Document No. DE102013200374, a household appliance is disclosed, the wireless communication feature of which can be activated by means of a button, and that is structurally simplified.

The aim of the present invention is the realization of a household appliance wherein excessive energy consumption is prevented.

The household appliance realized in order to attain the aim of the present invention, explicated in the first claim and the respective claims thereof, comprises a body; a door that provides access to the interior of the body; a sensor that detects the opening and the closing of the door; a control unit; and a module that realizes the data exchange between the control unit and the wireless communication terminal by means of wireless data exchange methods, and that has one active state wherein the module is accessible by the wireless communication terminals by means of emitting electromagnetic waves and one inactive state wherein the module does not emit electromagnetic waves. By means of the module, the operational settings of the household appliance can be changed by means of the wireless communication terminals like tablet, computers and smartphones.

In the household appliance of the present invention, the control unit communicates with the wireless communication terminal by changing the module to the active state from the inactive state upon detecting the opening of the door according to the data received from the sensor. Since the module is activated only when the user opens the door of the household appliance to use the household appliance, the possibility of nearby foreigners to communicate with the household appliance is decreased and the security of the wireless communication is increased. Moreover, since the module is not active while the household appliance is not in use, the energy consumption of the household appliance is decreased.

In an embodiment of the present invention, the control unit determines the number of successive openings/closings of the door in the time period predetermined by the producer, and activates the module when the number of successive openings/closings of the door is equal to a number that is predetermined by the producer. Thus, the module is activated only when the user desires to change the settings of the household appliance, and unnecessary operation of the module is prevented. Thus, moreover, easy access of foreigners or children to the settings of the household appliance who use the household appliance is prevented.

In an embodiment of the present invention, the household appliance comprises a control unit that turns off the module after the module operates for a predetermined time period. Thus, the module is prevented from being active in times that the module is not in use.

By means of the present invention, the need for the monitor or the control means like the button that are disposed on the household appliance and that enables the module to be activated is eliminated, and the production and assembly costs of the household appliance that is suitable for the communication with wireless communication terminals are decreased.

The household appliance realized in order to attain the aim of the present invention is illustrated in the attached figures, where:

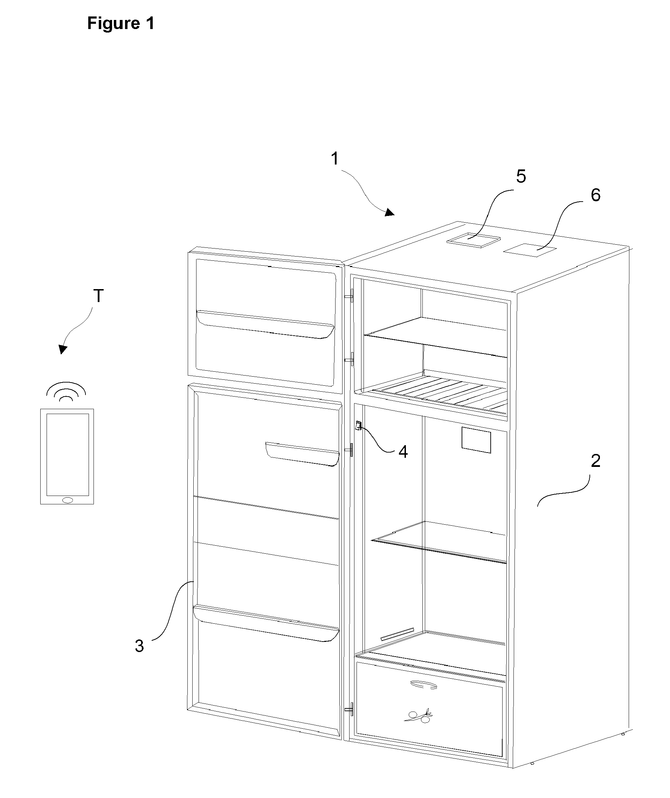

Figure 1 - is the schematic view of the household appliance related to an embodiment of the present invention and the wireless communication terminal.

The elements illustrated in the figures are numbered as follows:
1. Household appliance
2. Body
3. Door
4. Sensor
5. Control unit
6. Module

### T: wireless communication terminal

The household appliance (1) that is suitable for the communication with a wireless communication terminal (T), comprises a body (2); a door (3) that provides access to the interior of the body (2); a sensor (4) that detects the opening and the closing of the door (3); a control unit (5); and a module (6) that realizes the data exchange between the control unit (5) and the wireless communication terminal (T) by means of wireless data exchange methods, and that has one active state wherein the module (6) is accessible by the wireless communication terminals (T) by emitting electromagnetic waves and one inactive state wherein the module (6) does not emit electromagnetic waves. The household appliance (1) can be a white good such as refrigerator, dishwasher, washing machine, laundry dryer or oven, and the wireless data exchange with the user is enabled by state of the art methods such as infrared, radio signals, Bluetooth, etc.

The household appliance of the present invention comprises a control unit (5) that communicates with the wireless communication terminal (T) by changing the module (6) to the active state from the inactive state upon detecting the opening of the door (3) according to the data received from the sensor (4). The module (6) is kept in the inactive state when the household appliance (1) is not in use. When the sensor (4) detects that the user opens the door (3) to use the household appliance (1), the control unit (5) activates the module (6). Thus, the user can perform wireless data exchange with the control unit (5) by means of an interface that is disposed in the wireless communication terminal (T). Since the module (6) is only activated when the household appliance (1) is in use, the module (6) is prevented from continually emitting signals and the household appliance (1) is prevented from generating magnetic field pollution.

In an embodiment of the present invention, the household appliance (1) comprises the control unit (5) that determines the number of successive openings/closings of the door (3) according to the data received from the sensor (4), and that activates the module (6) when the number of successive openings/closings of the door (3) in the time period that is predetermined by the producer is equal to a predetermined number. When the user desires to change the settings of the household appliance (1), he/she successively opens/closes the door (3) in a number that is predetermined by the user or by the producer, and the control unit (5) activates the module (6). Thus, in the household appliances (1) that do not have a button or interface, the module (6) can be easily activated only when the user desires to change the settings of the household appliance (1).

In an embodiment of the present invention, the control unit (5) changes the module (6) in the active state to the inactive state at the end of a predetermined time period. Thus, the module (6) is prevented from remaining in the active state for a long period of time after the data exchange ends.

In an embodiment of the present invention, the module (6) realizes the data exchange by means of the Bluetooth method.

In an embodiment of the present invention, the household appliance (1) is a refrigerator. When the user opens the door (3) of the refrigerator, he/she can adjust the operational settings of the refrigerator like the cabin temperature, the freezing compartment temperature and the fan speed by means of the wireless communication terminal (T).

By means of the present invention, the unnecessary operation of the module (6) is prevented and the energy consumption of the household appliance (1) is decreased. In the household appliance (1) that does not have a user interface, the communication between the household appliance (1) and the user is facilitated by means of the mechanical activation of the module (6).

## Claims

1. A household appliance (1) that is suitable for the communication with a wireless communication terminal (T), and comprising a body (2); a door (3) that provides access to the interior of the body (2); a sensor (4) that detects the opening and the closing of the door (3); a control unit (5); and a module (6) that realizes the data exchange between the control unit (5) and the wireless communication terminal (T) by means of wireless data exchange methods, and that has one active state wherein the module (6) is accessible by the wireless communication terminals (T) by emitting electromagnetic waves and one inactive state wherein the module (6) does not emit electromagnetic waves, **characterized by** the control unit (5) that communicates with the wireless communication terminal (T) by changing the module (6) to the active state from the inactive state upon detecting the opening of the door (3) according to the data received from the sensor (4).

2. A household appliance (1) as in Claim 1, **characterized by** the control unit (5) that determines the number of successive openings/closings of the door (3) according to the data received from the sensor (4), and that activates the module (6) when the number of successive openings/closings of the door (3) is equal to a predetermined number.

3. A household appliance (1) as in any one of the above claims, **characterized by** the control unit (5) that changes the module (6) in the active state to the inactive state at the end of a predetermined time period.

4. A household appliance (1) as in any one of the above claims, **characterized by** the module (6) that realizes the data exchange by means of the Bluetooth method.

5. A household appliance (1) as in any one of the above claims, which is a refrigerator.
